# EUROPEAN PATENT APPLICATION

(11) **EP 3 323 530 A1**
(43) Date of publication of application: **23.05.2018**
(21) Application number: 16199142.7
(22) Date of filing: 16.11.2016
(51) Int. Cl.: B22F 3/105, B29C 67/00, G04B 19/12, G04B 29/02, B22F 3/00

(54) **3D PRINTED WATCH DIAL**

(71) Applicant: Montfort Watches SA, 1260 Nyon (CH); AIM - Accelerate Innovation Management SA, 1204 Geneve (CH)
(72) Inventor: SENGGEN, Jérémie, 1006 Lausanne (CH); KURATLE, Thomas, 1260 Nyon (CH); MEYER, Philippe, 1203 Genève (CH)
(74) Representative: Schwan Schorer & Partner mbB

(57) **Abstract**

There is provided a watch dial (10), wherein the dial is 3D-printed by an ink-jet on powder process, and a of manufacturing a dial (10) for a watch, comprising generating a digital model of the dial; dividing the digital model into a plurality of layers; forming a layered structure by subsequently printing each of the model layers layer-by-layer by ink-jet printing on a bed of powdered material; cleaning the layered structure; and sintering the cleaned layered structure so as to obtain the dial.

## Description

The invention relates to a watch dial and a method of manufacturing such.

To produce a watch dial may require up to 300 operations, wherein some of these operations are done manually, which is time consuming and expensive. Typically, the manufacturing of dials includes the following main steps: In a first step a disk is cut with a stamping machine in order to get a desired three-dimensional shape, wherein stamping is done between three and six times with a series of annealing in-between each step to prevent work hardening of the metal making it too brittle. The disk then is decorated using different techniques which may include polishing, satin finishing, painting, galvanizing or machining. Thereafter the disk receives the so-called dial feet, which are small pins with a length of a few millimeters made out of brass or copper which are soldered or press fit to holes drilled into the dial beforehand. These feet allow to easily assemble the dial with the movement and fix them together. Since the alignment with the movement is achieved by these feet, high precision is required for the feet. In case that the dial has several patterns or decorative elements, additional steps are required such as providing for different passages, and even machining of the metal may be required to generate specific shapes. Often little holes of 0.2 mm are drilled on top of the dial for receiving the indexes.

US 8,689,446 B2 relates to a watch case which is produced by an additive layer-by-layer direct metal laser sintering process; alternatively, an electron beam melting process or an ultrasonic consolidation additive manufacturing process may be used.

US 2014/0362673 A1 relates to a watch, wherein the body and the lid of the watch case may be produced by a laser sintering process or a 3D printing process.

CH 707 950 A2 relates to a watch made of a chromium-cobalt alloy, wherein outer parts of the watch or moving parts of the watch may be produced by a layer-by-layer process by using, for example, a CO₂ laser for selective laser sintering of a powder of a chromium cobalt alloy.

CH 707 326 A2 relates to a watch, wherein a movable element is produced by an additive manufacturing method like stereo lithography or electroforming in a photo resin mold.

It is an object of the invention to provide for a watch dial which can be produced in a particularly efficient manner. It is a further object to provide for a method of manufacturing such watch dial.

According to the invention, these objects are achieved by a watch as defined in claim 1 and a method as defined in claim 8, respectively.

The invention is beneficial in that, by producing the dial with a 3D ink-jet on powder printing process, dials with complex surface structures and complex 3D shapes may be produced in a relatively efficient manner, requiring only a relatively small number of steps; in particular, ink jet 3D printing is more suitable for mass production than other 3D printing processes, such as laser sintering. More in detail, ink-jet printing processes provide for a large number of different usable powder materials, high accuracy and high production speed.

Hereinafter, examples of the invention will be illustrated by reference to the attached drawings, wherein:
- Figs. 1 and 2: are perspective views of an example of a watch dial according to the invention with different feet dimensions;
- Fig. 3: is a perspective view of another example of a watch dial with a first example of reinforcement structures during an intermediate manufacturing stage is shown;
- Figs. 4 and 5: are views like Fig. 3, wherein two alternative examples of reinforcement structures are shown; and
- Fig. 6: is a perspective view of an example of a dial combined with a movement holder.

Typically, a watch comprises a case, a movement, a movement holder, a dial and hands driven by the movement.

It is known as such that 3D structures can be generated by "ink-jet on powder" 3D printing processes.

According to the present invention, the watch dial is 3D-printed by an "ink-jet on powder" process, wherein the powder typically is a metal powder. In a first step of such 3D printing a digital model of the dial is generated, i.e. a data set representing a 3D model of dial is generated, with the digital model being divided into a plurality of layers. On the basis of these layers a layered structure is formed by subsequently printing each of the model layers layer-by-layer-wise by ink-jet printing on a bed of powdered material, wherein an adhesive agent ("glue") is distributed by a printer on powdered material. Such 3D printing process is relatively fast and accurate and, since no melting step is included, avoids high temperatures and is applicable to a relatively large number of different powder materials. Once the layered structure is finished, it may be cleaned to remove loose powdered material and thereafter may be heat treated to remove the adhesive agent and sintered so as to finally obtain the dial in a durable state. Since the heat treatment / sintering typically results in a shrinking or compression of the layered structure obtained by the 3D printing process by 10 to 40%, the digital model increases the actual dimensions by 10 to 40% in order to compensate for the final shrinking.

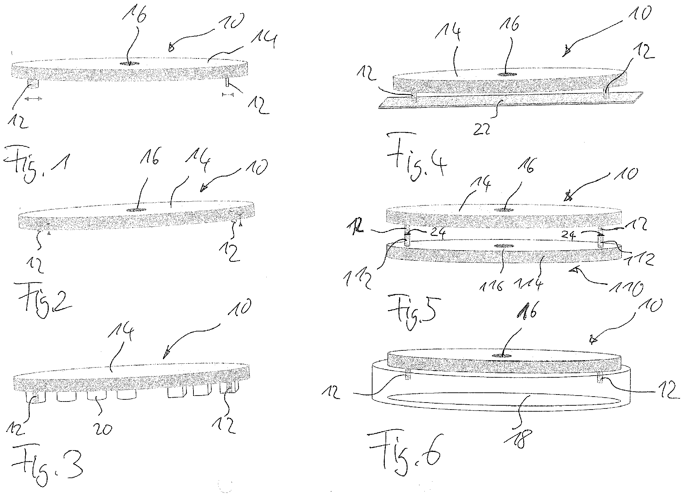

Typically, the dial includes at least one foot, preferably at least two feet, for connecting the dial with the movement. In Figs. 1 to 6 examples of a 3D printed dial 10 with feet 12 and a disk-like portion 14 which comprises a central opening 16 for the shaft driving the hands of the watch (not shown). Typically, each foot has a length of 0.1 mm to 5 mm, preferably from 1.5 mm to 2.6 mm, and a diameter of from 0.5 mm to 0.8 mm.

Typically, the side of the dial disk 14 facing the hands comprises elevations and indentations formed by the 3D printing process.

In Fig. 6 an example is shown wherein not only the dial 10 but also the movement holder 18 is printed by the 3D ink-jet on powder process together with the dial 10 in such a manner that the dial 10 and the movement holder 18 are formed in a single piece.

An important issue of such dials is the level flatness and roundness of the dial. In order to provide for a high level flatness of the dial several measures are helpful.

For example, increasing or reducing the thickness of the dial may have an impact on the level flatness, as well as increasing or reducing the diameter of the feet 12, as indicated in Fig. 1. Level flatness also may be increased by reducing the length of the feet 12 (see Fig. 2), since thereby handling of the dial 10 may be made easier.

Typically, the layered structure obtained by the printing process is very fragile, especially the feet, so that handling of the layered structure required for placement of the structure in a furnace for heat treatment / sintering may be difficult. In particular, the dial and the feet may bend due to gravity. When using a support plate for the dial in the region between the feet in order to avoid such bending, one does not exactly know how the feet will laterally "move" during heat treatment / sintering due to shrinking, so that placement of the support plate may be difficult. One option to avoid such problem would be to place the layered structures upside down on the support plate during heat treatment / sintering. According to another option, the support plate may be made of a material which undergoes the same or similar shrinking during sintering as the layered structure.

Further, specific reinforcing structures may be implemented during manufacturing of the dial. In particular, such reinforcing structures may be provided by the printing process, so that the reinforcement structures are present during sintering for stabilizing the layered structure during sintering, wherein the reinforcement structures then may be removed after the sintering, for example by laser treatment, drilling, wire cutting and/or knife cutting.

Preferably, the reinforcement structures are provided at the side of the disc 14 facing away from the hands.

A first example of such reinforcement structures is shown in Fig. 3, wherein the disk 14 is provided with a plurality of support columns 20 which are distributed over the side of the disk 14 facing away from the hands (i.e. the lower side of the disk 14 in Figs. 1 to 6).

Typically, the columns 20 have their free ends in the same plane, i.e. if the disk 14 is flat, the columns 20 all would have the same length.

According to the example of Fig. 4, the reinforcement structure may be a flat plate 22 which connects the ends of the feet 12 facing away from the hands, i.e. the feet 12 "rest" on the panel/plate 22. As in the case of the support columns 20, the support plate 22 will be removed after the sintering.

According to the example of Fig. 5, a first dial 10 and a second dial 110 are produced by the same 3D printing process in one piece in a mirror-symmetric configuration, so that each foot 12 of the first dial 10 is connected, as a single piece, to the respective foot 112 of the second dial 110, so that the dials 10, 110 mutually support and stabilize each other during sintering. After sintering, the dials 10, 110 may be separated by cutting through the columns connecting the disks 14, 114, thereby creating the free ends of the feet 12, 112, respectively. The cutting line is indicated at 24 in Fig. 5.

## Claims

1. A watch dial (10), wherein the dial is 3D-printed by an ink-jet on powder process.

2. The dial of claim 1, wherein the dial (10) is made of a metal powder and is sintered.

3. The dial of one of claims 1 and 2, wherein the dial (10) includes at least one foot (12) for connecting the dial with a movement.

4. The dial of claim 3, wherein the at least one foot (12) has a length of from 0.1 mm to 5 mm, preferably from 1.5 mm to 2.6 mm, and a diameter of from 0.5 mm to 0.8 mm.

5. The dial of one of the preceding claims, wherein a movement holder (18) is 3D-printed by an ink-jet on metal powder process together with the dial (10), so as to be one piece with the dial.

6. The dial of one of the preceding claims, wherein the side of the dial (10) configured to face the hands of a watch comprises elevations and indentations formed by the 3D-printing process.

7. A watch comprising a case, a movement, a movement holder and the dial of one of the preceding claims.

8. A method of manufacturing a dial (10) for a watch, comprising:
generating a digital model of the dial;
dividing the digital model into a plurality of layers;
forming a layered structure by subsequently printing each of the model layers layer-by-layer by ink-jet printing on a bed of powdered material;
cleaning the layered structure; and
sintering the cleaned layered structure so as to obtain the dial.

9. The method of claim 8, wherein the layered structure is formed such that it includes reinforcement structures (20, 22, 110) for reinforcing the layered structure during the sintering so as to maintain level flatness of the layered structure during the sintering, and wherein the reinforcement structures are removed after sintering.

10. The method of claim 9, wherein the reinforcement structures (20, 22, 110) are removed by at least one of laser treatment, drilling, wire cutting and knife cutting.

11. The method of one of claim 9 and 10, wherein the reinforcement structures (20, 22, 110) are provided at the side of the dial (10) configured to face away from the hands of a watch.

12. The method of claim 11, wherein the reinforcement structures comprise a plurality of support columns (20) distributed over the area of the side of the dial (10) configured to face away from the hands of a watch.

13. The method of claim 11, wherein the dial (10) comprises at least two feet (12) and wherein the reinforcement structures comprise a flat plate (22) connecting the ends of the feet facing away from the dial.

14. The method of claim 11, wherein the reinforcement structures comprise a second dial (110) which is mirror-symmetric to the dial (10), wherein the dial and the second dial each comprises at least two feet (12, 112), with the dial and the second dial being connected by their feet as one piece, and wherein after the sintering the feet are cut through so as to separate the dial and the second dial by creating free ends of the feet.

15. The method of one of claims 8 to 14, wherein the layered structure is supported by support plate during the sintering, and wherein the support plate is made of a material which undergoes substantially the same shrinking during sintering as the layered structure.
